# EUROPÄISCHE PATENTSCHRIFT

(11) **EP 1 555 477 B1**
(45) Veröffentlichungstag und Bekanntmachung des Hinweises auf die Patenterteilung: **21.11.2007**
(21) Anmeldenummer: 04030169.9
(22) Anmeldetag: 20.12.2004
(51) Int. Cl.: F21S 8/00, F21Y 113/02

(54) **Leuchte mit verschiedenfarbigen Lichtquellen sowie einer Lichtleiterplatte zum Abgeben von Mischlicht**
Luminaire comprising light sources of different colours and a planar light guide for emitting mixed light
Luminaire comprenant des sources lumineuses de différentes couleurs ainsi qu'un guide de lumière plan pour émettre un mélange de lumières

(30) Priorität: 15.01.2004 DE 102004002251
(43) Veröffentlichungstag der Anmeldung: 20.07.2005
(73) Patentinhaber: Zumtobel Lighting GmbH, 6850 Dornbirn (AT)
(72) Erfinder: Keller, Katharina, Dipl.-Phys., 88131 Lindau (DE)
(74) Vertreter: Schmidt-Evers, Jürgen

(56) Entgegenhaltungen:
- WO-A-01/84046
- WO-A-02/066892
- DE-A- 10 036 812
- DE-A- 10 216 645
- DE-U- 29 923 835
- DE-U1- 20 007 134
- FR-A- 2 819 040
- US-A- 5 027 258
- US-A- 5 442 522
- US-A1- 2002 114 147
- PATENT ABSTRACTS OF JAPAN Bd. 2002, Nr. 08, 5. August 2002 (2002-08-05) & JP 2002 100229 A (CASIO COMPUT CO LTD), 5. April 2002 (2002-04-05)

## Beschreibung

Die vorliegende Erfindung betrifft eine Leuchte mit Lichtquellen, die Licht in unterschiedlichen Farben abgeben, sowie mit einer Lichtleiterplatte zum Mischen und Abgeben des aus den verschiedenfarbigen Lichtarten erzeugten Mischlichts.

Leuchten, die zur Raumbeleuchtung vorgesehen sind, weisen üblicherweise eine oder mehrere Lichtquellen auf, die Licht in weißer Farbe abgeben. Dabei werden zur Beleuchtung größerer Gebäude oder Räume heutzutage als Lichtquellen üblicherweise Gasentladungslampen, insbesondere Leuchtstoffröhren eingesetzt, da diese einen besonders hohen Wirkungsgrad aufweisen und bei geeigneter Ansteuerung auch eine hohe Lebensdauer erzielt werden kann. Mit Hilfe entsprechender Steuergeräte besteht darüber hinaus auch die Möglichkeit, die Helligkeit dieser Lampen zu variieren. Der Nachteil von Gasentladungslampen ist allerdings, dass ihre Farbtemperatur in der Regel nicht oder nahezu nicht veränderbar ist.

Gerade in letzter Zeit ist vermehrt der Wunsch aufgetreten, dem von Leuchten abgegebenen Licht eine bestimmte Farbnuance verleihen zu können. Hierdurch könnten optisch ansprechende Beleuchtungseffekte erzielt werden, indem dem von der Leuchte abgegebenen Licht beispielsweise morgens ein eher bläulicher und abends ein eher rötlicher, also wärmerer Farbton verliehen wird.

Eine Leuchte, bei der das Licht unterschiedlich farbiger Lichtquellen kombiniert und als Mischlicht abgegeben wird, ist beispielsweise aus der DE 200 07 134 U1 bekannt. Diese bekannte Leuchte weist zunächst eine erste Lichtquelle zum Erzeugen von Weißlicht in Form einer Leuchtstoffröhre auf, deren Licht mit Hilfe eines kleineren Reflektors rückwärts gegen einen Hauptreflektor geworfen wird. Innerhalb des Leuchtengehäuses sind ferner mehrere Leuchtdioden angeordnet, die zum Erzielen der unterschiedlichen Farbnuancen vorgesehen sind. Das von den Leuchtdioden abgestrahlte farbige Licht wird hierfür ebenfalls gegen den Hauptreflektor gestrahlt und hierdurch mit dem Weißlicht der Leuchtstofflampe gemischt. Anschließend werden dann die Lichtstrahlen über eine an der Lichtaustrittsseite des Leuchtengehäuses angeordnete Diffusor-Scheibe als Mischlicht abgestrahlt.

Die aus der DE 200 07 134 U1 bekannte Leuchte erfüllt zwar den angestrebten Zweck, nämlich das Licht zweier verschiedenfarbiger Lichtquellen als Mischlicht abzugeben, aufgrund der hierzu erforderlichen Mehrfachreflexionen an unterschiedlichen Reflektoren ergibt sich allerdings eine verhältnismäßig hohe Bauweise für die Leuchte.

Um die Bauhöhe zur reduzieren, sind aus der DE 102 16 645 A1 und WO 02/066892 A1 Leuchten bzw. Beleuchtungsanordnungen bekannt, bei denen zur Lichtmischung eine flache, transparente Lichtleiterplatte verwendet wird. Die verschiedenfarbigen Lichtquellen sind in diesem Fall an den Stirnseiten der Lichtleiterplatte angeordnet und strahlen ihr Licht in diese ein, wodurch eine Vermischung der verschieden Lichtarten erzielt wird. Diese Lösungen führen zwar zu sehr flachen Leuchten, allerdings ist die Mischung des Lichts nicht optimal, so dass über die Abstrahlfläche der Lichtleiterplatte hinweg Farbunterschiede auftreten können.

Aus der US 5,442,522 ist ferner eine Anordnung zur Hinterleuchtung eines Displays bekannt, bei der zwei keilförmige Lichtleitelemente eingesetzt werden, in die jeweils eine stärkere und eine schwächere Lichtquelle je nach Umgebungshelligkeit Licht einstrahlen. Ferner beschreibt die DE 100 36 812 A1 eine Beleuchtungseinrichtung zur Beleuchtung des Innenraums eines Fahrzeugs, wobei als Leuchtmittel eine Elektrolumineszenzfolie verwendet wird.

Der vorliegenden Erfindung liegt die Aufgabe zugrunde, eine alternative Möglichkeit zum Erzeugen von Mischlicht anzugeben, wobei insbesondere die Möglichkeit bestehen soll, Leuchten in einer flachen Bauweise zu realisieren und gleichzeitig eine optimale Mischung des Lichts sicherzustellen.

Die Aufgabe wird durch eine Leuchte, welche die Merkmale des Anspruchs 1 aufweist, gelöst. Weiterbildungen der Erfindung sind Gegenstand der Unteransprüche.

Die erfindungsgemäße Leuchte weist zunächst eine erste Lichtquelle zum Erzeugen von vorzugsweise weißem Licht sowie mindestens eine zweite Lichtquelle zum Erzeugen von farbigem Licht und eine erste Lichtleiterplatte auf, in welche das Licht beider Lichtquellen eingekoppelt wird und an anderer Stelle wieder gemeinsam als Mischlicht austritt. Eine der beiden Lichtquellen ist hierbei seitlich neben der Lichtleiterplatte angeordnet und strahlt ihr Licht seitlich in diese ein. Erfindungsgemäß ist - in Abstrahlrichtung gesehen - hinter der zur Lichtmischung vorgesehenen ersten Lichtleiterplatte eine zweite Lichtleiterplatte angeordnet, über welche das Licht derjenigen Lichtquelle, die nicht seitlich neben der ersten Lichtleiterplatte angeordnet ist, auf die erste Lichtleiterplatte abgegeben wird.

Das Mischen des unterschiedlich farbigen Lichts erfolgt somit nicht durch Reflexionen an Reflektoren sondern mit Hilfe einer transparenten Lichtleiterplatte, in der die eingekoppelten verschiedenfarbigen Lichtstrahlen derart verteilt bzw. gestreut werden, dass an einer Lichtaustrittsseite ein homogen gemischtes Licht abgegeben wird. Bei der erfindungsgemäßen Lösung strahlt ferner die weitere Lichtquelle ihr Licht ebenfalls seitlich in die zweite Lichtleiterplatte ein, die wiederum für die Umlenkung des Lichts in Richtung auf die erste Lichtleiterplatte und für eine gleichmäßige Abstrahlung sorgt. Diese Lösung zeichnet sich dadurch aus, dass durch die zweite Lichtleiterplatte bereits eine gute - und zum effektiven Mischen der verschiedenen Lichtsorten erforderliche - Verteilung des Lichts der zweiten Lichtquelle erzielt wird, wobei die Verwendung der zweiten Lichtleiterplatte ferner wiederum den zusätzlichen Vorteil mit sich bringt, dass hierfür nur eine sehr geringe Höhe erforderlich ist und dementsprechend die Leuchte sehr kompakt bzw. flach gehalten werden kann.

Zur Klarstellung sei hier gesagt, dass unter der Mischung verschiedenfarbigen Lichts verstanden wird, dass die Abstrahlcharakteristik der Leuchte für beide Farben im wesentlichen gleich sein soll. Für einen Beobachter der Leuchte bedeutet dies, dass er keine zwei getrennte Lichtquellen mit verschiedenen Farben erkennen kann sondern statt dessen der Eindruck erweckt wird, dass die Raumbeleuchtung durch eine einzige Lichtquelle erfolgt, die beide Farbarten gemeinsam bzw. gleichzeitig abstrahlt.

Ist vorgesehen, dass in die Lichtleiterplatte bzw. Lichtleiterplatten das Licht der entsprechenden Lichtquellen jeweils nur von einer Seite her seitlich eingestrahlt wird, so kann an der gegenüberliegenden Seite ein Reflektor vorgesehen sein, um zu verhindern, dass Licht an dieser Seite austritt und dementsprechend verlorengeht. Alternativ dazu bestünde allerdings auch die Möglichkeit, Licht von beiden Seiten her in die Lichtleiterplatte bzw. Lichtleiterplatten einzustrahlen.

Die Lichtleiterplatten können in Abstrahlrichtung ferner Diffusorschichten aufweisen, die aufgrund ihrer streuenden Wirkung nochmals für eine verbesserte Mischung der verschiedenfarbigen Lichtstrahlen sorgen. Diese Diffusorschichten können beispielsweise durch eine Ätzung oder Gravur gebildet sein.

Gemäß einer besonders bevorzugten Ausführungsform der vorliegenden Erfindung sind neben der ersten Lichtquelle, die beispielsweise zum Erzeugen von Weißlicht vorgesehen ist, mehrere verschiedenfarbige zweite Lichtquellen vorgesehen, die wahlweise aktivierbar sind. Es besteht dann die Möglichkeit, dem abgegebenen Mischlicht Farbnuancen in unterschiedlichen Farbtönen zu verleihen, wodurch beispielsweise die oben angesprochenen Effekte - Erzeugen von bläulichem Licht am Morgen und rötlichem Licht am Abend - realisiert werden können. Um die Möglichkeit zur Beeinflussung des Farbtons des abgegebenen Mischlichts weiter zu verbessern kann ferner vorgesehen sein, die Lichtintensität der Lichtquellen veränderbar zu gestalten.

Vor der Lichtleiterplatte kann - in Abstrahlrichtung gesehen - ein zusätzliches Lichtaustrittselement angeordnet sein, welches beispielsweise dazu vorgesehen ist, das von der Leuchte erzeugte Mischlicht in bestimmte Winkelbereiche abzustrahlen. Hierbei kann es sich beispielsweise um eine transparente Lichtauskopplungsplatte handeln, die mit einer Prismenstruktur versehen ist. Durch die Lichtbrechung an den Prismenoberflächen ist sichergestellt, dass das von der Leuchte abgegebene Licht lediglich in bestimmten Winkeln abgestrahlt wird und dementsprechend eine Blendung für einen Beobachter der Leuchte vermieden wird. Hierdurch eignet sich die Leuchte auch zu Beleuchtungszwecken, bei denen Blendungen vermieden werden sollen, beispielsweise in Büroräumen mit Bildschirmarbeitsplätzen.

Bei der Lichtquelle zum Erzeugen von Weißlicht handelt es sich vorzugsweise um eine Gasentladungslampe, insbesondere um eine Leuchtstoffröhre. Die farbige Lichtquelle bzw. Lichtquellen werden vorzugsweise durch LEDs realisiert. Hinzuzufügen ist, dass die Verwendung einer Weißlichtquelle nicht unbedingt erforderlich ist. So wäre es beispielsweise auch möglich, nur farbige Lichtquellen zu verwenden, deren Licht dann gemäß der vorliegenden Erfindung gemischt wird. Beispielsweise könnte als erste Lichtquelle auch eine Elektrolumineszenzfolie verwendet werden, die gelbliches Licht abgibt und deren Licht mit dem Licht von blauen LEDs gemischt wird.

Nachfolgend soll die Erfindung anhand der beiliegenden Zeichnungen näher erläutert werden. Es zeigen:
- Figur 1: ein Ausführungsbeispiel einer erfindungsgemäßen Leuchte im Schnitt und
- Figur 2: eine weitere Leuchte, welche nicht Gegenstand des Ansprüche ist.

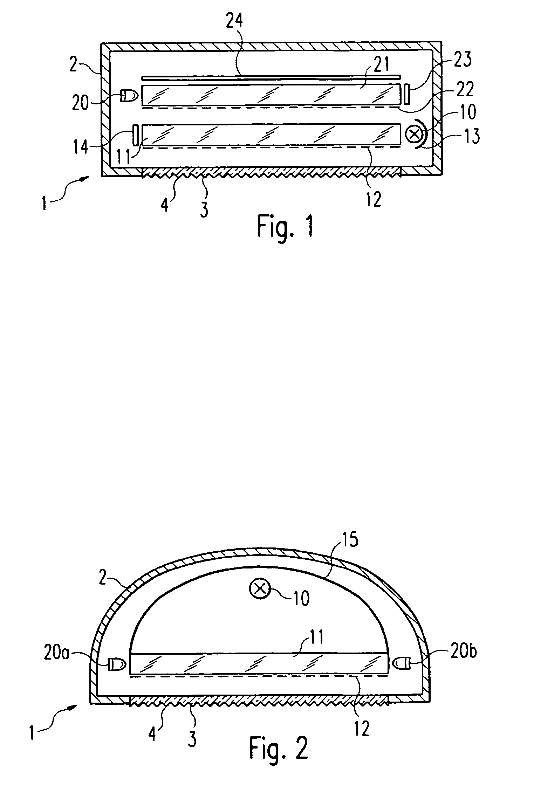

Die in Figur 1 dargestellte und allgemein mit dem Bezugszeichen 1 versehene Leuchte weist ein längliches, im Schnitt rechteckförmiges Leuchtengehäuse 2 auf, an dessen Lichtaustrittsseite ein Lichtaustrittselement in Form einer Lichtauskopplungsplatte 3 angeordnet ist. Die Lichtauskopplungsplatte 3 besteht aus einem transparenten Material - beispielsweise aus Kunststoff (PMMA, PC oder dgl.) - und dient dazu, das von der Leuchte 1 abgegebene Licht in vorgegebene Winkelbereiche abzustrahlen, um hierdurch für unterhalb der Leuchte 1 befindliche Personen Blendungen zu vermeiden. Zu diesem Zweck ist die dem Inneren der Leuchte 1 abgewandte Seite der Lichtauskopplungsplatte 3 mit einer Prismenstruktur 4 bestehend aus einer Vielzahl von länglichen oder rasterartig ausgebildeten Prismen versehen, die eine Lichtlenkung in der gewünschten Richtung bewirken. Die Prismen sind dabei derart ausgestaltet, dass durch diese hindurchtretende Lichtstrahlen derart abgelenkt bzw. gebrochen werden, dass sie die Leuchte 1 nur in gewünschten Richtungen verlassen können.

Soll die erfindungsgemäße Leuchte 1 u.a. auch zur Raumbeleuchtung verwendet werden, so sollte der zu beleuchtende Raum primär mit weißem Licht erhellt werden. Hierzu ist innerhalb des Leuchtengehäuses 2 eine erste Lichtquelle in Form einer länglichen Gasentladungslampe - insbesondere eine Leuchtstoffröhre 10 - vorgesehen, welche das gewünschte Weißlicht erzeugt. Gleichzeitig soll dem von der Leuchte 1 abgestrahlten Licht allerdings ein leichter Farbton verliehen werden, um beispielsweise eine bestimmte Stimmung zu erzielen. Hierzu ist eine zweite Lichtquelle 20 vorgesehen ist, die Licht in der gewünschten Farbe emittiert. Bei dieser zweiten Lichtquelle 20 handelt es sich vorzugsweise um eine oder eine Vielzahl von LEDs, die das Licht der entsprechenden Farbe erzeugen.

Alternativ zu den LEDs bestünde auch die Möglichkeit, eine Weißlichtquelle - beispielsweise eine weitere Gasentladungslampe - zu verwenden und das Licht dieser zweiten Lichtquelle mit Hilfe eines Farbfilters einzufärben. Eine andere Möglichkeit besteht auch darin, auf eine Weißlichtquelle vollständig zu verzichten und statt dessen eine weitere Lichtquelle, die farbiges Licht abgibt, einzusetzen. Eine bevorzugte Kombination besteht dann darin, als erste Lichtquelle eine Elektrolumineszenzfolie zu verwenden, die gelbes Licht abgibt, und als zweite Lichtquelle blaue LEDs einzusetzen.

Damit der angestrebte Effekt der Lichtmischung voll zum Tragen kommt, ist erforderlich, dass das Licht der beiden Lichtquellen 10 und 20 möglichst gleichmäßig und gut miteinander vermischt und über die gesamte Fläche der Lichtauskopplungsplatte 3 hinweg in gleichmäßiger Farbe und Helligkeit abgegeben wird. Hierzu dient die erfindungsgemäße Mischanordnung, die nachfolgend erläutert werden soll.

Zentrales Element der erfindungsgemäßen Mischanordnung ist eine transparente Lichtleiterplatte 11, die in der Nähe der Lichtsauskopplungsplatte 3, also im unteren Bereich des Leuchtengehäuses 2 angeordnet ist. Das Licht beider Lichtquellen 10 und 20 wird in diese Lichtleiterplatte 11 eingekoppelt, in der es dann aufgrund interner Streuungen derart durchmischt wird, dass an der der Lichtauskopplungsplatte 3 zugewandten Flachseite der Lichtleiterplatte 11 das gewünschte Mischlicht in gleichmäßiger Farbe und Helligkeit austritt. Die Funktion der Lichtleiterplatte 11 stellt dabei sicher, eine gleichmäßige Durchmischung des Lichts erzielt wird und störende Effekte, z.B. sogenannte Farbschatten vermieden werden. Insbesondere wird erreicht, dass die Lichtabstrahlcharakteristik für beide Farben in etwa gleich ist.

Zur Einkopplung des Lichts der beiden Lichtquellen 10 und 20 in die Lichtleiterplatte 11 bestehen mehrere Möglichkeiten, die nachfolgend dargestellt werden sollen.

Bei der in Figur 1 dargestellten erfindungsgemäßen Variante wird das Licht der ersten Lichtquelle 10, also der Leuchtstoffröhre oder der Elektrolumineszenzfolie seitlich in die Lichtleiterplatte 11 eingestrahlt. Die erste Lichtquelle 10 ist hierzu seitlich neben der Lichtleiterplatte 11 angeordnet und an ihrer der Lichtleiterplatte 11 abgewandten Seite von einem bogenförmigen Reflektor 13 umgeben, der sicherstellt, dass möglichst das gesamte Licht der Lichtquelle 10 in die transparente Platte 11 eingekoppelt wird. Innerhalb der Lichtleiterplatte 11 wird dieses Licht dann gestreut und umgelenkt, so dass es schließlich an der der Lichtauskopplungsplatte 3 zugewandten Flachseite gleichmäßig austritt. Die Auskopplung des Lichts aus der Lichtleiterplatte 11 erfolgt u.a. mit Hilfe einer Diffusorschicht 12, die beispielsweise durch eine Ätzung oder Gravur in der Flachseite der Lichtleiterplatte 11 gebildet sein kann. Die durch die Diffusorschicht 12 entstehenden Unebenheiten in der Oberfläche der Lichtleiterplatte 11 sorgen dafür, dass Lichtstrahlen nicht intern reflektiert sondern herausgestreut werden. Gleichzeitig sorgt die Diffusorschicht 12 aufgrund ihrer streuenden Eigenschaften dafür, dass das Licht möglichst gleichmäßig abgegeben wird.

Im dargestellten Ausführungsbeispiel bedeckt die Diffusorschicht 12 die Lichtaustrittsfläche der Lichtleiterplatte 11 vollständig, es wäre allerdings auch möglich, diese Schicht auf einen oder mehrere bestimmte Bereiche lokal zu begrenzen. Zur Vermeidung eines Lichtaustritts an der der Lichtquelle 10 gegenüberliegenden Seite der Lichtleiterplatte 11 ist ferner ein länglicher Reflektor 14 vorgesehen, der an dieser Seite austretende Lichtstrahlen zurück in die Lichtleiterplatte 11 wirft.

Die Verwendung derartiger Lichtleiterplatten zur flächigen Abgabe von Licht, bei denen Licht seitlich eingestrahlt wird, ist bereits bekannt. Erfindungsgemäß wird nun allerdings vorgeschlagen, derartige Lichtleiterplatten dazu zu verwenden, das Licht verschiedenfarbiger Lichtquellen zu mischen und hierdurch ein homogenes Mischlicht zu erzeugen.

Das von der farbigen zweiten Lichtquelle 20 erzeugte Licht wird hierzu an der der Diffusorschicht 12 gegenüberliegenden Flachseite der Lichtleiterplatte 11 in diese eingekoppelt, was mit Hilfe einer weiteren, in Abstrahlrichtung hinter der Lichtleiterplatte 11 angeordneten zweiten Lichtleiterplatte 21 erfolgt. Diese zweite Lichtleiterplatte 21 ist baugleich zu der ersten Lichtleiterplatte 11 ausgestaltet und weist an ihrer der ersten Lichtleiterplatte 11 zugewandten Flachseite wiederum eine Diffusorschicht 22 zur gleichmäßigen Lichtauskopplung auf. Das Licht der farbigen Lichtquelle 20 wird seitlich in diese zweite Lichtleiterplatte 21 eingekoppelt und durch die gleichen Effekte wie im Zusammenhang mit der ersten Lichtleiterplatte 11 beschrieben umgelenkt und über die Diffusorschicht 22 auf die erste Lichtleiterplatte 11 abgegeben. Der Vorteil der Verwendung der zweiten Lichtleiterplatte 21 besteht darin, dass hierdurch das Licht der farbigen Lichtquelle 20 bereits verteilt wird, bevor es in die erste Lichtleiterplatte 11 eingestrahlt wird. Dies ist wichtig, da Licht, welches über eine Flachseite in die Lichtleiterplatten eingekoppelt wird, im Vergleich zu einem seitlich eingestrahlten Licht nur zu einem gewissen Grad verteilt wird. Die zweite Lichtleiterplatte 21 stellt somit sicher, dass eine möglichst homogene und gleichmäßige Verteilung des farbigen Lichts und damit eine effektive Vermischung des Lichts der beiden Lichtquellen 10 und 20 erzielt wird.

Ebenso wie bei der ersten Lichtleiterplatte 11 kann auch bei der zweiten Lichtleiterplatte 21 ein Reflektor 23 vorgesehen sein, der an der der Lichtquelle 20 gegenüberliegenden Seite angeordnet ist. Darüber hinaus wird die gesamte Anordnung bestehend aus den beiden Lichtleiterplatten 11 und 21 von einem rückwärtigen Reflektor 24 überdeckt, der sicherstellt, dass alles von den Lichtquellen 10 und 20 abgetrahlte Licht zur Raumbeleuchtung genutzt werden kann.

Die Funktion der erfindungsgemäßen Mischanordnung ist dann wie folgt. Zunächst wird das von der zweiten Lichtquelle 20 seitlich in die rückwärtige Lichtleiterplatte 21 eingestrahlte Licht durch diese gestreut und gleichmäßig verteilt über die Diffusorschicht 22 auf die vordere Lichtleiterplatte 11 gestrahlt. In dieser vorderen Lichtleiterplatte 11 erfolgt eine weitere Verteilung des farbigen Lichts. Gleichzeitig wird allerdings auch das von der ersten Lichtquelle 10 seitlich eingestrahlte Licht verteilt und gemeinsam mit dem Licht der zweiten Lichtquelle 20 über die Diffusorschicht 12 auf die Lichtauskopplungsplatte 3 gestrahlt und über diese abgegeben. Insgesamt wird hierbei eine gleichmäßige Aufhellung eines zu beleuchtenden Bereichs unterhalb der Leuchte 1 in der angestrebten Mischfarbe erzielt. Die erfindungsgemäße Lösung zeichnet sich dabei dadurch aus, dass durch die Verwendung der Lichtleiterplatten 11 und 21 eine möglichst gute und gleichmäßige Lichtmischung erzielt wird. Gleichzeitig ist lediglich eine geringe Bauhöhe erforderlich, da die Lichtleiterplatten 11, 21 sehr flach ausgestaltet werden können.

Anzumerken ist, dass auf die Reflektoren 14, 23 und 24 auch verzichtet werden könnte. Ferner könnte zur Steigerung der Lichtausbeute auch vorgesehen sein, Licht von mehreren Seiten her in die Lichtleiteaplatte(n) einzustrahlen. Ist ferner eine gerichtete Lichtabgabe nicht erforderlich, so kann auch auf die Lichtauskopplungsplatte 3 mit der Prismenstruktur 4 verzichtet werden, wobei dann die untere Lichtleiterplatte 11 die Uchtauskopplungsfläche der Leuchte 1 bildet. Ferner könnte selbstverständlich auch die Anordnung der beiden Lichtquellen 10 und 20 vertauscht werden.

Ein zweites Ausführungsbeispiel einer Leuchte, welches allerdings, nicht Gegenstand des Ansprüche ist, ist in Figur 2 dargestellt. Dieses zweite Ausführungsbeispiel weist lediglich eine einzige Lichtleiterplatte 11 auf, die wiederum dazu dient, das Licht unterschiedlich farbiger Lichtquellen zu mischen. Bei diesem Ausführungsbeispiel ist - in Abstrahlrichtung gesehen - hinter der Lichtleiterplatte 11 eine erste Lichtquelle in Form einer länglichen Leuchtstoffröhre 10 - alternativ dazu wäre wiederum die Verwendung einer farbigen Lichtquelle, insbesondere einer Elektrolumineszenzfolie denkbar - angeordnet, die ihr Licht unmittelbar über die Flachseite in die Lichtleiterplatte 11 einstrahlt. Damit die Lichtleiterplatte 11 möglichst gleichmäßig von dem Licht der ersten Lichtquelle 10 angestrahlt wird, ist ein entsprechend gestalteter bogenförmiger Reflektor 15 vorgesehen, der die Lichtquelle 10 überspannt.

Zum Erzielen der gewünschten Farbnuance für das letztendlich abgestrahlte Mischlicht sind nunmehr zwei farbige Lichtquellen 20a und 20b vorgesehen, die Licht von den jeweils gegenüberliegenden Seiten in die Lichtleiterplatte 11 einstrahlen können. Vorzugsweise sind die Lichtquellen 20a, 20b unterschiedlich farbig ausgestaltet, wobei beispielsweise eine Lichtquelle rotes Licht und die andere Lichtquelle blaues Licht abgibt. Es besteht dann die Möglichkeit, dem von der Leuchte abgegebenen Mischlicht je nach Wunsch unterschiedliche Farbnuancen zu verleihen. Selbstverständlich könnten auch noch weitere farbige Lichtquellen zum Einsatz kommen, die wahlweise Licht in anderen Farben seitlich in die Lichtleiterplatte 11 einstrahlen.

Die Mischung des Lichts der ersten Lichtquelle 10 und des farbigen Lichts durch die Lichtleiterplatte 11 erfolgt wie bei dem ersten Ausführungsbeispiel, d.h. das von den farbigen Lichtquellen 20a bzw. 20b eingekoppelte Licht wird ebenso umgelenkt und mit dem Licht der Leuchtstoffröhre 10 derart vermischt, dass es als homogenes Mischlicht über die Diffusorschicht 12 abgestrahlt und mit Hilfe der Lichtauskopplungsplatte 3 in gewünschte Winkelbereiche abgelenkt wird.

Insbesondere bei dem zweiten Ausführungsbeispiel ist es erwünscht, die Lichtquellen in ihrer Intensität einstellen zu können. Hierdurch kann nicht nur der Farbton des Mischlichts verändert werden sondern es besteht auch die Möglichkeit, die Gesamtintensität des Leuchte sowie die Intensität des Farbtons zu beeinflussen. Die Verstellbarkeit der Lichtintensität der Lichtquellen kann selbstverständlich auch bei dem Ausführungsbeispiel in Figur 1 vorgesehen sein.

Die erfindungsgemäße Leuchte zeichnet sich dadurch aus, dass eine besonders gute und gleichmäßige Lichtmischung erzielt wird. Es wird somit eine neuartige Möglichkeit angegeben, optisch ansprechende Beleuchtungseffekte zu erzielen, indem Licht unterschiedlicher Farbe zur gemeinsamen Beleuchtung gemischt wird.

## Patentansprüche

1. Leuchte (1) mit
• einer ersten Lichtquelle (10) zum Erzeugen von vorzugsweise weißem Licht und
• mindestens einer zweiten Lichtquelle (20, 20a, 20b) zum Erzeugen von farbigem Licht sowie
• einer zur Lichtmischung vorgesehenen transparenten Lichtleiterplatte (11), in welche das Licht beider Lichtquellen (10, 20, 20a, 20b) eingekoppelt wird und an anderer Stelle wieder gemeinsam als Mischlicht austritt,
wobei zumindest eine der beiden Lichtquellen (10, 20, 20a, 20b) seitlich neben der Lichtleiterplatte (11) angeordnet ist und ihr Licht seitlich in diese einstrahlt,
**dadurch gekennzeichnet,**
**dass** - in Abstrahlrichtung gesehen - hinter der zur Lichtmischung vorgesehenen Lichtleiterplatte (11) eine zweite Lichtleiterplatte (21) angeordnet ist, über welche das Licht derjenigen Lichtquelle, die nicht seitlich neben der ersten Lichtleiterplatte (11) angeordnet ist, auf die erste Lichtleiterplatte (11) abgegeben wird.

2. Leuchte nach Anspruch 1,
**dadurch gekennzeichnet,**
**dass** das Licht derjenigen Lichtquelle, die nicht seitlich neben der Lichtleiterplatte (11) angeordnet ist, über die der Lichtabstrahlrichtung abgewandte Flachseite der Lichtleiterplatte (11) in diese eingekoppelt wird.

3. Leuchte nach Anspruch 1 oder 2,
**dadurch gekennzeichnet,**
**dass** die weitere Lichtquelle ihr Licht ebenfalls seitlich in die zweite Lichtleiterplatte (21) einstrahlt.

4. Leuchte nach Anspruch 3,
**dadurch gekennzeichnet,**
**dass** an der der weiteren Lichtquelle gegenüberliegenden Seite der zweiten Lichtleiterplatte (21) ein Reflektor (23) angeordnet ist.

5. Leuchte nach Anspruch 3 oder 4,
**dadurch gekennzeichnet,**
**dass** hinter der zweiten Lichtleiterplatte (21) ein Reflektor (24) angeordnet ist.

6. Leuchte nach einem der Ansprüche 1 bis 5,
**dadurch gekennzeichnet,**
**dass** die zweite Lichtleiterplatte (21) an ihrer der ersten Lichtleiterplatte (11) zugewandten Flachseite mit einer Diffusorschicht (22) versehen ist.

7. Leuchte nach einem der vorherigen Ansprüche,
**dadurch gekennzeichnet,**
**dass** die erste Lichtleiterplatte (11) an ihrer zur Lichtabgabe vorgesehenen Flachseite mit einer Diffusorschicht (12) versehen ist.

8. Leuchte nach Anspruch 6 oder 7,
**dadurch gekennzeichnet,**
**dass** die Diffusorschicht bzw. Diffusorschichten (12, 22) durch eine Ätzung oder Gravur gebildet ist bzw. sind.

9. Leuchte nach einem der vorherigen Ansprüche,
**dadurch gekennzeichnet,**
**dass** mehrere farbige Lichtquellen (20a, 20b) vorgesehen sind, die Licht unterschiedlicher Farbe abgeben und wahlweise aktivierbar sind.

10. Leuchte nach Anspruch 9,
**dadurch gekennzeichnet,**
**dass** die verschiedenfarbigen Lichtquellen (20a, 20b) an einander gegenüberliegenden Seiten der Lichtleiterplatte (11) angeordnet sind.

11. Leuchte nach einem der vorherigen Ansprüche,
**dadurch gekennzeichnet,**
**dass** - in Abstrahlrichtung gesehen - vor der Lichtleiterplatte (11) ein Lichtaustrittselement (3) angeordnet ist.

12. Leuchte nach Anspruch 11,
**dadurch gekennzeichnet,**
**dass** des sich bei dem Lichtaustrittselement um eine transparente Lichtauskopplungsplatte (3) handelt.

13. Leuchte nach Anspruch 12,
**dadurch gekennzeichnet,**
**dass** die Lichtauskopplungsplatte (3) an ihrer der Lichtleiterplatte (11) abgewandten Seite eine Prismenstruktur aufweist.

14. Leuchte nach einem der vorherigen Ansprüche,
**dadurch gekennzeichnet,**
**dass** die verschiedenen Lichtquellen (10, 20, 20a, 20b) in ihrer Intensität veränderbar sind.

15. Leuchte nach einem der vorigen Ansprüche,
**dadurch gekennzeichnet,**
**dass** es sich bei der farbigen Lichtquelle bzw. den farbigen Lichtquellen um eine oder mehrere LEDs handelt.

16. Leuchte nach einem der vorherigen Ansprüche,
**dadurch gekennzeichnet,**
**dass** es sich bei der ersten Lichtquelle um eine Gasentladungslampe, insbesondere um eine Leuchtstoffröhre handelt.

17. Leuchte nach einem der Ansprüche 1 bis 15,
**dadurch gekennzeichnet,**
**dass** es sich bei einer der beiden Lichtquellen um eine Elektrolumineszenzfolie handelt.

## Claims

1. Luminaire (1) having
• a first light source (10) for producing preferably white light and
• at least one second light source (20, 20a, 20b) for producing coloured light and
• a transparent light guide plate (11) provided for light mixing, into which the light of both light sources (10, 20, 20a, 20b) is coupled and exits again at a different location together as mixed light,
wherein at least one of the two light sources (10, 20, 20a, 20b) is arranged to the side beside the light guide plate (11) and radiates its light at the side into this,
**characterised in that**,
seen in the direction of radiation a second light guide plate (21) is arranged behind the light guide plate (11) provided for light mixing, via which second light guide plate the light of that light source which is not arranged to the side beside the first light guide plate (11) is issued onto the first light guide plate (11).

2. Luminaire according to claim 1, **characterised in that**,
the light of that light source which is not arranged to the side beside the light guide plate (11), is - via the flat side of the light guide plate (11) away from the light emission direction - coupled into this light guide plate.

3. Luminaire according to claim 1 or 2,
**characterised in that**,
the further light source likewise radiates its light into the second light guide plate (21) at the side.

4. Luminaire according to claim 3,
**characterised in that**,
a reflector (23) is arranged on the side of the second light guide plate (21) lying opposite the further light source.

5. Luminaire according to claim 3 or 4, **characterised in that**,
a reflector (24) is arranged behind the second light guide plate (21).

6. Luminaire according to any of claims 1 to 5,
**characterised in that**,
the second light guide plate (21) is provided with a diffusor layer (22) on its flat side towards the first light guide plate (11).

7. Luminaire according to any preceding claim,
**characterised in that**,
the first light guide plate (11) is provided on its flat side provided for the issuing of light with a diffusor layer (12).

8. Luminaire according to claim 6 or 7,
**characterised in that**,
the diffusor layer or layers (12, 22) is or are formed by means of an etching or engraving.

9. Luminaire according to any preceding claim,
**characterised in that**,
a plurality of coloured light sources (20a, 20b) are provided which issue light of different colour and are selectively activatable.

10. Luminaire according to claim 9,
**characterised in that**,
the different coloured light sources (20a, 20b) are arranged on sides of the light guide plate (11) lying opposite one another.

11. Luminaire according to any preceding claim,
**characterised in that**,
seen in emission direction - a light exit element (3) is arranged in front of the light guide plate (11).

12. Luminaire according to claim 11,
**characterised in that**,
the light exit element is a transparent light extraction plate (3).

13. Luminaire according to claim 12, **characterised in that**,
the light extraction plate (3) has a prism structure on its side away from the light guide plate (11).

14. Luminaire according to any preceding claim,
**characterised in that**,
the different light sources (10, 20, 20a, 20b) are changeable in their intensity.

15. Luminaire according to any preceding claim,
**characterised in that**,
the coloured light source or the coloured light sources are one or a plurality of LEDs.

16. Luminaire according to any preceding claim,
**characterised in that**,
the first light source is a gas-discharge lamp, in particular a fluorescent tube.

17. Luminaire according to any of claims 1 to 15,
**characterised in that**,
one of the two light sources is an electroluminescent film.

## Revendications

1. Luminaire (1) comprenant :
• une première source lumineuse (10) pour générer de la lumière de préférence blanche et
• au moins une seconde source lumineuse (20, 20a, 20b) pour générer de la lumière de couleur et
• une plaque guide de lumière (11) transparente, prévue pour le mélange de la lumière, dans laquelle la lumière des deux sources lumineuses (10, 20, 20a, 20b) est injectée et sort en un autre endroit à nouveau ensemble sous forme de lumière mixte,
au moins l'une des deux sources lumineuses (10, 20, 20a, 20b) étant disposée sur le côté près de la plaque guide de lumière (11) et envoyant sa lumière latéralement dans cette plaque,
**caractérisé en ce que**,
derrière la plaque guide de lumière (11) prévue pour le mélange de lumière, vu dans le sens de rayonnement, est disposée une seconde plaque guide de lumière (21), par laquelle la lumière de la source lumineuse, qui n'est pas disposée sur le côté près de la première plaque guide de lumière (11), est envoyée sur la première plaque guide de lumière (11).

2. Luminaire selon la revendication 1,
**caractérisé en ce que**
la lumière de la source, qui n'est pas disposée sur le côté près de la plaque guide de lumière (11), est injectée par le côté plat, opposé au sens de rayonnement de lumière, de la plaque guide de lumière (11) dans celle-ci.

3. Luminaire selon la revendication 1 ou 2,
**caractérisé en ce que** l'autre source lumineuse envoie sa lumière également sur le côté dans la seconde plaque guide de lumière (21).

4. Luminaire selon la revendication 3,
**caractérisé en ce que**
un réflecteur (23) est disposé sur le côté, opposé à l'autre source lumineuse, de la seconde plaque guide de lumière (21).

5. Luminaire selon la revendication 3 ou 4,
**caractérisé en ce que**
un réflecteur (24) est disposé derrière la seconde plaque guide de lumière (21).

6. Luminaire selon l'une quelconque des revendications 1 à 5,
**caractérisé en ce que**
la seconde plaque guide de lumière (21) est dotée d'une couche de diffusion (22) sur son côté plat tourné vers la première plaque guide de lumière (11).

7. Luminaire selon l'une quelconque des revendications précédentes,
**caractérisé en ce que**
la première plaque guide de lumière (11) est dotée d'une couche de diffusion (12) sur son côté plat prévu pour l'envoi de lumière.

8. Luminaire selon la revendication 6 ou 7,
**caractérisé en ce que**
la couche de diffusion ou les couches de diffusion (12, 22) est formée ou sont formées par un décapage ou une gravure.

9. Luminaire selon l'une quelconque des revendications précédentes,
**caractérisé en ce que**
plusieurs sources lumineuses (20a, 20b) de couleur sont prévues, lesquelles peuvent émettre de la lumière de couleurs différentes et peuvent être activées au choix.

10. Luminaire selon la revendication 9,
**caractérisé en ce que**
les sources lumineuses (20a, 20b) de couleurs différentes sont disposées sur des côtés se faisant face de la plaque guide de lumière (11).

11. Luminaire selon l'une quelconque des revendications précédentes,
**caractérisé en ce que**
un élément de sortie de lumière (3) est disposé devant la plaque guide de lumière (11), vu dans le sens de rayonnement.

12. Luminaire selon la revendication 11,
**caractérisé en ce que**
en ce qui concerne l'élément de sortie de lumière, il s'agit d'une plaque de découplage de lumière (3) transparente.

13. Luminaire selon la revendication 12,
**caractérisé en ce que**
la plaque de découplage de lumière (3) présente une structure de prisme sur son côté opposé à la plaque guide de lumière (11).

14. Luminaire selon l'une quelconque des revendications précédentes,
**caractérisé en ce que**
les différentes sources de lumière (10, 20, 20a, 20b) peuvent être modifiées dans leur intensité.

15. Luminaire selon l'une quelconque des revendications précédentes,
**caractérisé en ce que**,
en ce qui concerne la source de lumière de couleur ou les sources de lumière de couleur, il s'agit d'une LED ou de plusieurs LEDs.

16. Luminaire selon l'une quelconque ou plusieurs des revendications précédentes,
**caractérisé en ce que**,
en ce qui concerne la première source lumineuse, il s'agit d'une lampe à décharge, en particulier d'un tube fluorescent.

17. Luminaire selon l'une quelconque des revendications 1 à 15,
**caractérisé en ce que**
en ce qui concerne l'une des deux sources lumineuses, il s'agit d'un film électroluminescent.
